# FASCICULE DE BREVET EUROPEEN

(11) **EP 2 874 882 B1**
(45) Date de publication et mention de la délivrance du brevet: **07.09.2016**
(21) Numéro de dépôt: 13744736.3
(22) Date de dépôt: 11.07.2013
(51) Int. Cl.: B64D 41/00

(54) **DISPOSITIF D'ALIMENTATION DE SECOURS POUR AERONEF ET AERONEF POURVU D'UN TEL DISPOSITIF**
NOTSTROMVERSORGUNGSVORRICHTUNG FÜR EIN FLUGZEUG UND MIT EINER SOLCHEN VORRICHTUNG AUSGERÜSTETES FLUGZEUG
EMERGENCY POWER SUPPLY DEVICE FOR AIRCRAFT AND AIRCRAFT EQUIPPED WITH SUCH A DEVICE

(30) Priorité: 23.07.2012 FR 1257113
(43) Date de publication de la demande: 27.05.2015
(73) Titulaire: Labinal Power Systems, 31700 Blagnac (FR)
(72) Inventeur: MORA, Jérôme, 92350 Le Plessis Robinson (FR)
(74) Mandataire: Gevers & Orès
(86) Numéro de dépôt international: PCT/FR2013/051669
(87) Numéro de publication internationale: WO 2014/016492

(56) Documents cités:
- DE-B- 1 032 033
- US-A- 6 127 758
- US-A1- 2012 006 938
- US-B1- 6 776 002
- US-B1- 8 192 158

## Description

L'invention concerne un dispositif d'alimentation de secours pour aéronef et un aéronef pourvu d'un tel dispositif.

On sait de façon générale que le pilotage d'un avion, notamment d'un avion d'un certain gabarit, ne peut être réalisé de façon entièrement mécanique en ultime secours et qu'il requiert une source d'énergie indépendante du système d'énergie principal. Cette source doit, de façon autonome et sans limitation de durée, délivrer suffisamment d'énergie pour assurer le pilotage de l'avion et un atterrissage sûr de ce dernier.

Sur les avions actuels, un système à hélice auxiliaire, dit RAT (« Ram Air Turbine » en anglais), est utilisé généralement comme source d'énergie d'ultime secours. Ce système délivre une énergie hydraulique ou électrique ou une combinaison de ces deux énergies permettant l'alimentation en énergie des éléments critiques de l'avion.

Néanmoins, un système RAT est relativement lourd, et doit être déployé pour sa mise en service. De plus, étant non utilisé sauf en cas de panne, il est difficilement testable et peut présenter des pannes dormantes (non visibles immédiatement).

L'invention vise à réaliser un dispositif d'alimentation de secours pour aéronef, qui ne nécessite pas de déploiement d'un système mécanique, et qui apporte un gain de masse significatif sur l'avion.

Il est proposé un dispositif d'alimentation de secours pour aéronef selon la revendication 1.

Dans le contexte de la revendication 1, on entend par vent relatif le flux aérodynamique créé par la vitesse propre de l'avion.

Il résulte de cette disposition un dispositif d'alimentation de secours pour aéronef, qui fonctionne de façon autonome et indépendante du système d'énergie principal de l'aéronef, en vol, et qui peut être monté sur un aéronef sans nécessiter de déploiement d'un système mécanique, tel qu'un système RAT comportant un dispositif de renvoi rigide et lourd.

Ladite turbine et/ou ledit générateur est avantageusement relié(e) ou associé(e) à au moins un dispositif d'entraînement auxiliaire de cette dernière et/ou de ce dernier en vue de produire de l'énergie à l'aéronef dans toutes les situations de fonctionnement de ce dernier (aéronef en vol ou au sol).

Un tel dispositif est déjà connu du document DE-1032033-B.

Toutefois selon l'invention, le dispositif d'entraînement auxiliaire est un dispositif à tube de venturi alimenté par une source d'air, de préférence issue de l'aéronef, et disposé ou formé dans le conduit de prise d'air pour entraîner ladite turbine.

Ce dispositif d'entraînement auxiliaire est apte à être accouplé à ladite turbine en vue de l'entraîner ou d'en être désaccouplé.

Le dispositif d'entraînement auxiliaire peut ainsi être accouplé à ladite turbine dans une condition de l'aéronef au sol, lorsque la turbine ne peut être entraînée par le vent relatif. Le dispositif d'entraînement auxiliaire peut en outre être désaccouplé de la turbine dans une condition de l'aéronef en cours de vol où le vent relatif est suffisant pour entraîner la turbine à une vitesse suffisante pour fournir l'énergie requise, mais il peut aussi être accouplé à la turbine en vol pour accroître la vitesse d'entraînement de cette dernière et fournir davantage d'énergie à l'aéronef.

Ledit conduit comporte avantageusement au moins un volet d'entrée et/ou de sortie d'air, mobile de façon réglable entre une position fermée et ouverte, de préférence entièrement, ce volet permettant d'ajuster la vitesse de ladite turbine à l'énergie requise.

De préférence, Ledit conduit de prise d'air comporte un seul volet, soit un volet d'entrée d'air soit un volet de sortie d'air.

Ledit dispositif d'alimentation de secours comporte avantageusement une unité de commande reliée audit dispositif générateur d'énergie pour l'aéronef, audit dispositif d'entraînement auxiliaire et audit volet d'entrée et/ou de sortie d'air, apte à piloter le dispositif en asservissement à une énergie requise, à savoir mouvoir de façon réglable le volet d'entrée et/ou de sortie d'air, et réaliser l'accouplement/désaccouplement du dispositif d'entraînement auxiliaire à la turbine.

Il est également proposé un aéronef pourvu d'un dispositif d'alimentation de secours tel que défini ci-dessus.

Le dispositif générateur d'énergie est avantageusement un générateur d'énergie électrique de l'aéronef, et en particulier un des générateurs principaux de l'aéronef, lequel est ainsi également utilisé comme source d'énergie électrique de secours pour l'aéronef.

Ledit générateur est alors entraîné en mode nominal par une des sources de puissance principale de l'aéronef (moteurs de l'aéronef, système APU) et, en mode secours, il est entraîné de façon indépendante par ladite turbine du conduit de prise d'air, laquelle est actionnée par un vent relatif ou flux aérodynamique créé par la vitesse propre de l'avion. Cette configuration limite le risque de panne dormante d'un dispositif de secours totalement indépendant, rarement utilisé et testé.

Le dispositif d'entraînement auxiliaire est avantageusement un dispositif à tube de venturi alimenté par une source d'air de l'aéronef et disposé ou formé dans le conduit de prise d'air pour entraîner ladite turbine, la source d'air étant par exemple le dispositif de prélèvement d'air ou le dispositif de conditionnement d'air de l'aéronef.

Le conduit de prise d'air est avantageusement formé en tant que dispositif à tube de venturi disposé en aval de la turbine relativement au flux d'air aérodynamique.

Ce dispositif à tube de venturi est apte à être commandé en fonctionnement par ladite unité de commande, principalement dans une condition de l'aéronef au sol, mais comme précité, il peut également être mis en fonctionnement en cours de vol pour accroître la vitesse de la turbine et donc l'énergie produite.

Le conduit de prise d'air comprend avantageusement une entrée formée dans le corps de fuselage de l'aéronef, une partie principale formée dans le corps de fuselage de l'aéronef, et une sortie formée dans le corps de fuselage de l'aéronef, ladite entrée et/ou ladite sortie étant pourvue d'un volet de sortie d'air débouchant à la surface du corps de fuselage.

Cette disposition limite la traînée aérodynamique propre au dispositif, puisque la partie principale du conduit de prise d'air est dans le corps de fuselage de l'aéronef.

Par ailleurs, l'entrée du conduit de prise d'air peut être couplée à un système de prise d'air de l'aéronef, tel que le système de conditionnement d'air de l'aéronef.

L'invention concerne également une nouvelle utilisation d'un générateur d'énergie électrique pour un aéronef, en particulier un des générateurs principaux de l'aéronef, comme source d'énergie électrique de secours pour l'aéronef, ledit générateur étant apte à être entraîné au moyen d'au moins une turbine disposée dans un conduit de prise d'air de l'aéronef pour être entraînée par le vent relatif du vol de l'aéronef, et en particulier au moyen d'un dispositif d'alimentation de secours tel que défini ci-dessus.

Un exemple de réalisation de l'invention est à présent décrit en référence au dessin annexé, sur lequel :

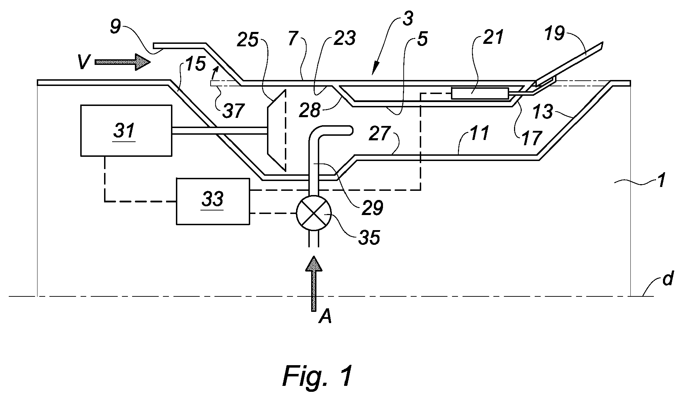

la figure 1 est une vue schématique en coupe d'un aéronef pourvu d'un dispositif d'alimentation de secours selon un mode de réalisation de l'invention.

Des signes de référence identiques, utilisés dans les figures, se rapportent à des éléments identiques ou techniquement équivalents.

Les termes « supérieur », « médian » et « inférieur » se réfèrent au positionnement relatif en mode standard d'utilisation ou de montage.

Les termes « longitudinal » et « transversal » qualifient des éléments s'étendant respectivement selon une direction donnée et selon un plan perpendiculaire à cette direction.

Avec référence à la figure 1, un aéronef 1 comprenant un dispositif d'alimentation de secours 3, tel que représenté, comporte un conduit de prise d'air 5 disposé le long du corps de fuselage 7 de l'aéronef, sensiblement dans l'axe longitudinal d de l'aéronef. Ce conduit de prise d'air 5 est apte à capter par son entrée 9 un flux aérodynamique ou le vent relatif V au cours du vol de l'aéronef.

Le conduit 5 comprend une entrée antérieure 9 (à gauche sur le dessin) formée dans le corps de fuselage 7 de l'aéronef, une partie principale 11 formée dans le corps de fuselage 7 de l'aéronef et en communication avec l'entrée 9, et une sortie 13 disposée à l'arrière de la partie principale 11 et en communication avec cette dernière.

L'entrée 9 comporte une partie tubulaire 15 tournée vers l'intérieur du corps de fuselage 7 de l'aéronef.

La sortie 13 comporte une partie tubulaire 17 tournée vers l'extérieur du corps de fuselage 7 de l'aéronef, et débouchant à la surface du corps de fuselage 7 de l'aéronef. Cette sortie 13 comprend un volet 19 de sortie d'air, mobile de façon réglable par un actionneur 21 (de type vérin par exemple), entre une position fermée (en trait mixte) tangente au corps de fuselage 7 de l'aéronef et une position ouverte en saillie du corps de fuselage de l'aéronef (telle que représentée).

La partie principale 11 du conduit de prise d'air comprend une partie évasée antérieure 23 dans laquelle est disposée une turbine 25, et une partie tubulaire arrière 27 de section réduite, parallèle à l'axe longitudinal d de l'aéronef et formant tube venturi 28 dans le conduit.

Le conduit de prise d'air est disposé ici parallèlement à l'axe longitudinal de l'aéronef mais il pourrait encore être transversal à l'axe longitudinal de l'aéronef.

Un conduit d'éjection d'air 29, relié à une source d'air A de l'aéronef, telle que le système de prise d'air ou de conditionnement d'air de l'aéronef (non représenté), est disposé à l'arrière de la turbine 25 et dans la partie évasée 23 de conduit. Ce conduit d'éjection d'air 29 est destiné à former un courant d'air apte à entraîner la turbine 25 en coopération avec le tube de venturi 28.

La turbine 25, disposée coaxiale à l'axe d du corps de fuselage de l'aéronef, est reliée à un générateur d'énergie électrique 31 de l'aéronef, en particulier un des générateurs principaux de l'aéronef.

Le générateur 31 peut également être relié, au moyen d'un dispositif d'accouplement (non représenté), par exemple de type à roue libre, à une source de puissance principale de l'aéronef, tel qu'un moteur ou le dispositif APU de l'aéronef (non représenté), étant entraîné par ce moteur lorsque le vent relatif est inexistant ou insuffisant.

Le fait d'accoupler la turbine au générateur permet de vérifier en permanence, par la production d'énergie produite, que la turbine fonctionne. On pallie ainsi le problème d'une défaillance de la turbine ou d'une panne dormante du dispositif si cette dernière n'était utilisée que dans les situations d'urgence et donc rarement.

Le générateur 31 est donc entraîné par ladite turbine 25 du conduit de prise d'air, laquelle est actionnée par le vent relatif ou flux aérodynamique V créé par la vitesse propre de l'avion en vol.

Une unité de commande 33, reliée au tableau de pilotage de l'aéronef (non représenté), au générateur d'énergie 31, à une vanne 35 d'alimentation du conduit d'éjection d'air 29, à l'actionneur 21 du volet 19 de sortie d'air et éventuellement audit dispositif d'accouplement, pilote le dispositif d'alimentation de secours 3. Cette unité de commande 33 pilote le dispositif 3 en asservissement à une énergie requise pour l'aéronef, en correspondance à une situation donnée de l'aéronef, notamment une situation d'urgence de l'aéronef. Cette unité de commande 33 initie ainsi le mouvement du volet 19 de sortie d'air et l'actionnement de la vanne 35 du conduit d'éjection d'air 29 pour entraîner la turbine 25 à une vitesse correspondant à une énergie du générateur 31 requise pour l'aéronef et notamment en cas de situation d'urgence.

Le fonctionnement du dispositif 3 est à présent décrit. Il résulte de la description précédente.

On envisage, une situation d'urgence en vol. Cette situation est appelée lorsqu'il est détecté une panne dans le dispositif d'alimentation principal de l'aéronef. Une commutation de l'alimentation électrique de l'aéronef au mode secours, avec production d'une alarme, est réalisée automatiquement par un dispositif de gestion de l'énergie (non représenté) de l'aéronef qui détecte la panne du dispositif d'alimentation principal de l'aéronef.

Dans la situation d'urgence en vol de l'aéronef, le vent relatif V de vol de l'aéronef entraîne la turbine 25 et donc le générateur associé 31 pour produire une énergie de secours à l'aéronef. Si cette énergie produite n'est pas suffisante, l'unité de commande 33 peut ouvrir la vanne 35 du conduit d'éjection d'air en fonction de la source d'air A pour augmenter la vitesse de la turbine 25 et donc l'énergie produite par le générateur 31.

Il est à noter que, en fonctionnement normal de l'aéronef, le dispositif produit de l'énergie électrique, en vol, par l'entraînement de la turbine par le vent relatif et, au sol, par l'entraînement de la turbine par la mise en oeuvre du dispositif à tube de venturi.

Des variantes de réalisation entrent dans le cadre de l'invention.

Ainsi, au sens de l'invention, le dispositif d'alimentation de secours pour aéronef comprend au moins un conduit de prise d'air 5 configuré pour recevoir un vent relatif V au cours du vol de l'aéronef, et une turbine 25 disposée dans ledit conduit pour être entraînée par le vent relatif, ladite turbine étant reliée à au moins un dispositif générateur d'énergie 31 pour l'aéronef en vue de produire de l'énergie à l'aéronef au moins dans des conditions de vol de ce dernier.

Le générateur entraîné par la turbine 25 peut faire partie ou non du dispositif d'alimentation de secours 3, et de même le dispositif auxiliaire d'entrainement de la turbine 28, 29, de telle sorte que le dispositif 3 pourrait être livré et monté sur l'aéronef comme une unité indépendante.

Un volet d'entrée d'air 37, en trait mixte, dont l'actionneur n'est pas représenté, pourrait encore être monté à l'entrée 9 du conduit de prise d'air, ce volet pouvant être ouvert d'une position tangente au fuselage vers l'extérieur, selon flèche, par l'unité de commande pour favoriser la capture d'air dans le conduit de prise d'air. Le pilotage du dispositif peut alors être réalisé par le volet d'entrée et/ou le volet de sortie.

L'entrée du conduit de prise d'air pourrait encore être couplée au système de conditionnement d'air de l'aéronef ou à un autre système de prise d'air de l'aéronef.

Une autre possibilité, déjà évoquée, serait de lier mécaniquement le générateur au dispositif APU ou à un moteur, au travers d'une roue libre, ce qui permettrait l'entraînement du générateur par le moteur en mode normal et de le laisser entrainé par la turbine en cas de panne.

Il est aussi possible de prévoir d'autres formes pour le conduit de prise d'air.

## Revendications

1. Dispositif d'alimentation de secours pour aéronef, comprenant au moins un conduit de prise d'air (5) configuré pour recevoir un vent relatif V au cours du vol de l'aéronef, une turbine (25) disposée dans ledit conduit (5) pour être entraînée par le vent relatif V et au moins un dispositif générateur d'énergie (31) pour l'aéronef, ladite turbine (25) étant reliée audit dispositif générateur d'énergie (31) en vue de produire de l'énergie à l'aéronef au moins dans des conditions de vol de ce dernier, dans lequel ladite turbine (25) et/ou ledit générateur (31) est relié(e) ou associé(e) à au moins un dispositif d'entraînement auxiliaire (28, 29) de cette dernière et/ou de ce dernier,
**caractérisé en ce que** ledit dispositif d'entraînement auxiliaire (28, 29) est un dispositif à tube de venturi (28) alimenté par une source d'air (29) et disposé ou formé dans le conduit de prise d'air (5) pour entraîner ladite turbine (25).

2. Dispositif d'alimentation de secours pour aéronef, selon la revendication 1, dans lequel ledit dispositif d'entraînement auxiliaire (28, 29) est apte à être accouplé à ladite turbine (25) en vue de l'entraîner ou d'en être désaccouplé.

3. Dispositif d'alimentation de secours pour aéronef selon la revendication 1 ou 2, dans lequel ledit conduit de prise d'air (5) comporte au moins un volet d'entrée et/ou de sortie d'air (19), mobile de façon réglable entre une position fermée et ouverte.

4. Dispositif d'alimentation de secours pour aéronef selon la revendication 3, dans lequel ledit dispositif d'alimentation de secours (3) comporte une unité de commande (33) reliée au dispositif générateur d'énergie (31) pour l'aéronef, audit dispositif d'entraînement auxiliaire (28, 29) et audit volet d'entrée et/ou de sortie (19) d'air, apte à piloter le dispositif (3) en asservissement à une énergie requise.

5. Aéronef pourvu d'un dispositif d'alimentation de secours (3) selon l'une quelconque des revendications précédentes, dans lequel le dispositif générateur d'énergie (31) est un générateur d'énergie électrique de l'aéronef.

6. Aéronef selon la revendication 5, dans lequel le dispositif à tube de venturi (28) est alimenté par une source d'air (29) de l'aéronef.

7. Aéronef selon l'une des revendications 5 et 6, dans lequel le conduit de prise d'air (5) comprend une entrée (9) formée dans le corps de fuselage (7) de l'aéronef, une partie principale (11) formée dans le corps de fuselage (7) de l'aéronef, et une sortie (13) formée dans le corps de fuselage, ladite entrée et/ou ladite sortie étant pourvue d'un volet (19, 37) de sortie d'air et débouchant à la surface du corps de fuselage (7).

8. Aéronef selon l'une des revendications 5 à 7, dans lequel ledit générateur est relié à un dispositif APU de l'aéronef ou à un moteur au travers d'une roue libre, pour permettre l'entraînement du générateur par le moteur en mode normal et de le laisser entrainé par la turbine en cas de panne.

9. Utilisation d'un générateur d'énergie électrique (31) pour un aéronef (1), comme source d'énergie électrique de secours pour l'aéronef, ledit générateur (31) étant apte à être entraîné au moyen d'au moins une turbine (25) disposée dans un conduit de prise d'air (5) de l'aéronef pour être entraînée par le vent relatif V du vol de l'aéronef, dans laquelle ladite turbine (25) et/ou ledit générateur (31) est relié(e) ou associé(e) à au moins un dispositif d'entraînement auxiliaire (28, 29) de cette dernière et/ou de ce dernier, ledit dispositif d'entraînement auxiliaire (28, 29) étant un dispositif à tube de venturi (28) alimenté par une source d'air (29) et disposé ou formé dans le conduit de prise d'air (5) pour entraîner ladite turbine (25).

## Patentansprüche

1. Eine Notstromversorgungseinheit für ein Flugzeug, umfassend mindestens eine Luftzuführungsleitung (5), die konfiguriert ist, um während des Flugs des Flugzeugs einen Fahrtwind V aufzunehmen, eine Turbine (25), die in der besagten Luftzuführungsleitung (5) angeordnet ist, um durch den Fahrtwind V angetrieben zu werden, sowie mindestens eine Energieerzeugungsvorrichtung (31) für das Flugzeug, wobei besagte Turbine (25) mit der Energieerzeugungsvorrichtung (31) verbunden ist, um zumindest unter Flugbedingungen für das Flugzeug Energie zu produzieren, und wobei die besagte Turbine (25) und/oder die besagte Energieerzeugungsvorrichtung (31) an mindestens eine Hilfsantriebsvorrichtung (28, 29) angeschlossen oder mit einer solchen assoziiert ist/sind,
**dadurch gekennzeichnet, dass** besagte Hilfsantriebsvorrichtung (28, 29) eine Venturidüsen-Vorrichtung (28) ist, die über eine Luftquelle (29) versorgt wird, und in der Luftzuführungsleitung (5) angeordnet oder gebildet ist, um die besagte Turbine (25) antreiben zu können.

2. Notstromversorgungseinheit für ein Flugzeug gemäß Anspruch 1, in die besagte Hilfsantriebsvorrichtung (28, 29) geeignet ist, mit der besagten Turbine (25) gekoppelt zu werden, um diese anzutreiben, oder von ihr entkoppelt zu werden.

3. Notstromversorgungseinheit für ein Flugzeug gemäß Anspruch 1 oder 2, in der die besagte Luftzuführungsleitung (5) mindestens eine Lufteingangsklappe und/oder Luftausgangsklappe (19) umfasst, die mobil und zwischen einer geschlossenen und geöffneten Position verstellbar ist.

4. Notstromversorgungseinheit für ein Flugzeug gemäß Anspruch 3, in der die besagte Notstromversorgungseinheit (3) eine Steuerungseinheit (33) umfasst, die an die Energieerzeugungsvorrichtung (31) für das Flugzeug, an die besagte Hilfsantriebsvorrichtung (28, 29) und an die besagte Lufteingangsklappe und/oder Luftausgangsklappe (19) angeschlossen ist, und geeignet ist, die Einheit in Abhängigkeit einer erforderlichen Energie zu steuern.

5. Flugzeug, das mit einer Notstromversorgungseinheit (3) gemäß einem der vorstehenden Ansprüche ausgestattet ist, in dem die Energieerzeugungsvorrichtung (31) ein elektrischer Stromgenerator des Flugzeugs ist.

6. Flugzeug gemäß Anspruch 5, in dem die Venturidüsen-Vorrichtung (28) durch eine Luftquelle (29) des Flugzeugs versorgt wird.

7. Flugzeug gemäß einem der vorstehenden Ansprüche 5 und 6, in dem die Luftzuführungsleitung (5) einen Eingang (9), die im Rumpf (7) des Flugzeugs gebildet ist, einen Hauptteil (11), der im Rumpf (7) des Flugzeugs gebildet ist und einen Ausgang (13) umfasst, der im Rumpf des Flugzeugs gebildet ist, wobei besagter Eingang und/oder besagter Ausgang mit einer Luft-Austritts-Klappe (19, 37) bestückt ist/sind, die an der Oberfläche des Rumpfs (7) mündet.

8. Flugzeug gemäß einem der vorstehenden Ansprüche 5 bis 7, in dem der besagte Generator an einer APU-Vorrichtung (Hilfsstromaggregat) des Flugzeugs oder über einen Freilauf an einem Motor angeschlossen ist, um im Normalmodus den Antrieb des Generators durch den Motor und im Pannenfall durch die Turbine zu ermöglichen.

9. Verwendung eines elektrischen Stromgenerators (31) für ein Flugzeug (1), als Notstromquelle für das Flugzeug, wobei der besagte Generator (31) geeignet ist, durch mindestens eine Turbine (25) angetrieben zu werden, die in einer Luftzuführungsleitung (5) angeordnet ist, um im Flug des Flugzeugs durch den Fahrtwind V angetrieben zu werden, in der die besagte Turbine (25) und/oder der besagte Generator (31) mit mindestens einer Hilfsantriebsvorrichtung (28, 29) der- oder desselben verbunden oder assoziiert ist/sind, wobei besagte Hilfsantriebsvorrichtung (28, 29) eine Venturidüsen-Vorrichtung (28) ist, die durch eine Luftquelle (29) angetrieben wird und in der Luftzuführungsleitung (5) angeordnet oder gebildet ist, um besagte Turbine (25) anzutreiben.

## Claims

1. An emergency power supply device for aircraft, **characterized in that** it comprises at least one air intake duct (5) designed to receive a relative airflow V during the flight of the aircraft, a turbine (25) arranged in said duct (5), to be driven by the relative airflow V, and at least one device (31) for generating power for the aircraft, said turbine (25) being connected to said power-generating device (31) in order to produce power for the aircraft at least under flight conditions thereof, wherein said turbine (25) and/or said generator (31) is/are connected to or associated with at least one auxiliary drive device (28, 29) of the former and/or the latter, said auxiliary drive device (28, 29) being a device with a venturi tube (28) supplied by a source of air (29), and arranged or formed in the air intake duct (5) in order to drive said turbine (25).

2. The emergency power supply device for aircraft as claimed in claim 1, wherein said auxiliary drive device (28, 29) is capable of being coupled to said turbine (25) in order to drive it, or to be uncoupled from it.

3. The emergency power supply device for aircraft as claimed in claim 1 or 2, wherein said air intake duct (5) includes at least one air inlet and/or air outlet flap (19), mobile in an adjustable manner, between a closed and an open position.

4. The emergency power supply device for aircraft as claimed in claim 3, wherein said emergency power supply device (3) includes a control unit (33), connected to the power-generating device (31) for the aircraft, to said auxiliary drive device (28, 29) and to said air inlet and/or air outlet flap (19), and capable of controlling the device (3) as an automatic control of a required power.

5. An aircraft provided with an emergency power supply device (3) as claimed in any one of the preceding claims, wherein the power-generating device (31) is a generator of electrical power of the aircraft.

6. The aircraft as claimed in claim 5, wherein the venturi tube device (28) is supplied by a source of air (29) of the aircraft.

7. The aircraft as claimed in one of claims 5 and 6, wherein the air intake duct (5) includes an inlet (9) formed in the body of the aircraft fuselage (7), a main part (11) formed in the body of the aircraft fuselage (7) and an outlet (13) formed in the body of the fuselage, said inlet and/or said outlet being provided with an air outlet flap (19, 37) and opening out on the surface of the body of the fuselage (7).

8. The aircraft as claimed in one of claims 5 to 7, wherein said generator is connected to an APU device of the aircraft or to a motor/engine through a freewheel, in order to allow the generator to be driven by the motor/engine in normal mode and to leave it to be driven by the turbine in the event of a failure.

9. The utilization of an electrical power generator (31) for an aircraft (1) as a source of emergency electrical power for the aircraft, said generator (31) being capable of being driven by means of at least one turbine (25) arranged in an air intake duct (5) of the aircraft in order to be driven by the relative airflow V of the flight of the aircraft, wherein said turbine (25) and/or said generator (31) is/are connected or associated with at least one auxiliary drive device (28, 29) of the former and/or the latter, said auxiliary drive device (28, 29) being a device with a venturi tube (28) supplied by a source of air (29), and arranged or formed in the air intake duct (5) in order to drive said turbine (25).
